# EUROPÄISCHE PATENTSCHRIFT

(11) **EP 3 763 572 B1**
(45) Veröffentlichungstag und Bekanntmachung des Hinweises auf die Patenterteilung: **29.09.2021**
(21) Anmeldenummer: 19185489.2
(22) Anmeldetag: 10.07.2019
(51) Int. Cl.: B60R 13/10

(54) **VORRICHTUNG ZU HALTERUNG EINES KRAFTFAHRZEUGKENNZEICHENS**
DEVICE FOR HOLDING A VEHICLE LICENSE PLATE
DISPOSITIF DE MAINTIEN D'UNE PLAQUE D'IMMATRICULATION DE VÉHICULE AUTOMOBILE

(43) Veröffentlichungstag der Anmeldung: 13.01.2021
(73) Patentinhaber: EK2 GmbH, 59469 Ense (DE)
(72) Erfinder: KARAKILIC, Enes, 44339 Dortmund (DE)
(74) Vertreter: Schäperklaus, Jochen

(56) Entgegenhaltungen:
- DE-U1-202007 014 213
- GB-A- 811 954
- GB-A- 1 260 226
- GB-A- 2 382 838

## Beschreibung

Die vorliegende Erfindung betrifft eine Vorrichtung zur Halterung eines Kraftfahrzeugkennzeichens gemäß dem Oberbegriff des Anspruchs 1.

Aus dem Stand der Technik sind solche Vorrichtungen bekannt. DE 20 2015 005 486 U1 offenbart eine Vorrichtung, bei der das Kennzeichen mittels einer Einpresseinrichtung in Nuten eingepresst und dort gehalten wird.

GB 2 382 838 offenbart eine Vorrichtung zur Halterung eines Kraftfahrzeugkennzeichens umfassend einen Grundkörper, ein erstes Halterungsmittel und ein zweites Halterungsmittel zur Halterung des Kraftfahrzeugkennzeichens und Befestigungsmittel zur Befestigung der Vorrichtung an einem Kraftfahrzeug, wobei die Befestigungsmittel als Ausnehmungen ausgebildet sind, wobei die Halterungsmittel an zwei einander gegenüber angeordneten Enden des Grundkörpers angeordnet sind, wobei der Grundkörper und/ oder die Halterungsmittel elastisch verformbar sind sodass ein Kraftfahrzeugkennzeichen nach einer Verformung des Grundkörpers und/oder der Halterungsmittel zwischen den Halterungsmitteln anordenbar ist und danach durch eine elastische Rückstellkraft zwischen den Halterungsmitteln eingeklemmt ist. Die Halterungsmittel jeweils zwei Halterungselemente aufweisen, zwischen denen das Kraftfahrzeugkennzeichen durch die elastische Rückstellkraft einklemmbar ist, wobei die Halterungselemente unterschiedliche Abstände vom Grundkörper aufweisen.

Demgegenüber liegt der vorliegenden Erfindung die Aufgabe zugrunde, eine flexibel zu verwendende Vorrichtung zu schaffen. Außerdem soll ein System mit zwei solchen Vorrichtungen und ein Kraftfahrzeug mit einer solchen Vorrichtung geschaffen werden.

Diese Aufgabe wird durch eine Vorrichtung gemäß Anspruch 1, ein System gemäß Anspruch 13 und ein Kraftfahrzeug gemäß Anspruch 14 gelöst. Ausführungsformen der Erfindung sind in den abhängigen Ansprüchen angegeben.

Die Vorrichtung umfasst einen Grundkörper, ein erstes Halterungsmittel, ein zweites Halterungsmittel zur Halterung des Kennzeichens und Befestigungsmittel zur Befestigung der Vorrichtung an einem Kraftfahrzeug. Die Befestigungsmittel sind als Ausnehmungen ausgebildet. Die Halterungsmittel sind an zwei einander gegenüber angeordneten Enden des Grundkörpers angeordnet. Die Halterungsmittel können beispielsweise eine Nut umfassen. Der Grundkörper und/oder die Halterungsmittel ist bzw. sind elastisch verformbar. Nach einer Verformung des Grundkörpers und/oder der Halterungsmittel kann ein Kraftfahrzeugkennzeichen zwischen den Halterungsmitteln angeordnet werden. Falls die Halterungsmittel eine Nut umfassen, kann das Kraftfahrzeugkennzeichen in den Nuten angeordnet werden. Anschließend kann es durch die elastische Rückstellkraft zwischen den Halterungsmittel eingeklemmt sein.

Aufgrund der elastischen Verformbarkeit kann ein Benutzer ein Kennzeichen besonders einfach in die Vorrichtung einsetzen. Außerdem wird es aufgrund der elastischen Rückstellkraft sicher gehalten.

Die Halterungsmittel weisen jeweils zwei Halterungselemente auf, zwischen denen das Kraftfahrzeugkennzeichne durch die elastische Rückstellkraft einklemmbar ist. Die Halterungselemente weisen unterschiedliche Dicken und/oder Abstände vom Grundkörper auf. Beispielsweise können die Halterungselemente als Nuten ausgebildet sein.

Die zwei Halterungselemente mit unterschiedlichen Dicken und/oder unterschiedlichen Abständen sind insbesondere vorteilhaft, um unterschiedlich dicke Kraftfahrzeugkennzeichen sicher zwischen den Halterungsmitteln anzuordnen. Wenn die Halterungselemente als Nuten ausgebildet sind, kann beispielsweise eine dickere Nut für ein dickeres Kennzeichen verwendet werden, während eine schmalere Nut für ein dünneres Kennzeichen verwendet wird. Es ist insbesondere möglich, dass die dickere Nut an sogenannte 3D-Kennzeichen angepasst ist.

Nach einer Ausführungsform der Erfindung können sich die Halterungsmittel in etwa senkrecht weg vom Grundkörper erstrecken. Hierunter wird im Rahmen dieser Beschreibung insbesondere verstanden, dass sich die Halterungsmittel in einem Winkel zwischen 85° und 95° vom Grundkörper weg erstrecken.

Nach einer Ausführungsform der Erfindung können die Halterungsmittel an den am weitesten voneinander entfernten Enden des Grundkörpers angeordnet sein. Der Grundkörper kann beispielsweise länglich ausgebildet sein. Dies kann insbesondere bedeuten, dass er in einer Dimension eine Länge aufweist, die seine Breite und Dicke um mehr als das Dreifache übertrifft. Durch die Anordnung der Halterungsmittel an den Längsenden kann das Kraftfahrzeugkennzeichen besonders einfach zwischen den Halterungsmitteln eingesetzt werden.

Nach einer Ausführungsform der Erfindung können die Ausnehmungen ein erstes Langloch umfassen. Das Langloch ist besonders vorteilhaft, um die Vorrichtung an unterschiedlichen Kraftfahrzeugen anbringen zu können, bei denen die notwendige Lage der Ausnehmungen für eine sichere Befestigung variieren kann.

Nach einer Ausführungsform der Erfindung können die Ausnehmungen ein zweites Langloch und ein Rundloch umfassen. Unter einem Rundloch wird dabei im Rahmen dieser Beschreibung insbesondere ein kreisförmiges Loch verstanden. Das Rundloch kann zwischen den beiden Langlöchern angeordnet sein. So kann die Vorrichtung besonders sicher an verschiedenen Kraftfahrzeugen befestigt werden.

Nach einer Ausführungsform der Erfindung kann das Rundloch mittig am Grundkörper und/oder mittig zwischen den beiden Langlöchern angeordnet sein. Es ist insbesondere möglich, dass das Rundloch äquidistant zu den Langlöchern und/oder äquidistant zu den Halterungsmitteln angeordnet ist.

Nach einer Ausführungsform der Erfindung kann die Vorrichtung am Grundkörper angeordnete Dämpfungselemente aufweisen, die aus einem Elastomer bestehen. Diese Dämpfungselemente können dazu ausgebildet sein, beim Einsetzen des Kraftfahrzeugkennzeichens in Kontakt mit dem Kraftfahrzeugkennzeichen zu kommen. Sie dienen dazu, Vibrationen abzufedern, sodass das Kraftfahrzeugkennzeichen beim Betrieb des Kraftfahrzeugs möglichst wenig vibriert. Alternativ dazu können die Dämpfungselemente dazu ausgebildet sein, bei der Befestigung der Vorrichtung an einem Kraftfahrzeug in Kontakt mit dem Kraftfahrzeug zu kommen. In diesem Fall werden Vibrationen der Vorrichtung beim Betrieb des Kraftfahrzeugs verringert.

Ein weiterer Vorteil der Dämpfungselemente ist, dass unterschiedlich dicke Kraftfahrzeugkennzeichen einfach an der Vorrichtung befestigt werden können. Etwas dickere Kraftfahrzeugkennzeichen verformen die Dämpfungselemente dann mehr als etwas dünnere Kraftfahrzeugkennzeichen.

Nach einer Ausführungsform der Erfindung können die Dämpfungselemente auf zwei einander gegenüberliegenden Seiten des Grundkörpers angeordnet sein. Beispielsweise kann die eine Seite bei der bestimmungsgemäßen Verwendung der Vorrichtung dem Kraftfahrzeugkennzeichen und die andere Seite dem Kraftfahrzeug zugewandt sein. Die dem Kraftfahrzeug zugewandten Dämpfungselemente können eventuell vorhandene Unebenheiten am Kraftfahrzeug ausgleichen, sodass die Vorrichtung an besonders vielen Kraftfahrzeugen einfach verwendbar ist.

Nach einer Ausführungsform der Erfindung können sich die Dämpfungselemente über mehr als 2/3 einer Länge des Grundkörpers erstrecken. Unter der Länge wird dabei im Rahmen dieser Beschreibung insbesondere die längste Ausdehnungsrichtung des Grundkörpers verstanden.

Nach einer Ausführungsform der Erfindung können die Dämpfungselemente zwischen den Ausnehmungen und Längsenden des Grundkörpers angeordnet sein. Die Längsenden sind dabei die Enden des Grundkörpers, die in der Längenrichtung verlaufen. Es ist insbesondere möglich, dass die Längenrichtung der Dämpfungselemente parallel zu den Längsenden angeordnet ist.

Nach einer Ausführungsform der Erfindung können der Grundkörper und das Halterungsmittel einteilig und/oder einstückig ausgebildet sein.

Nach einer Ausführungsform der Erfindung kann die Vorrichtung ein Anzeigeelement umfassen, das an einem der Halterungsmittel angeordnet ist und vom Grundkörper weg ragt. Es ist insbesondere möglich, dass das Anzeigeelement parallel zu einer geometrischen Verlängerung des Grundkörpers angeordnet ist. Unter der geometrischen Verlängerung wird dabei verstanden, dass der Grundkörper virtuell verlängert wird, wobei die Verlängerung die gleiche Querschnittsform aufweist wie der Grundkörper.

Das Anzeigeelement kann beispielsweise für Informationen oder Werbung genutzt werden.

Das Kraftfahrzeug gemäß Anspruch 14 umfasst eine Vorrichtung nach einer Ausführungsform der Erfindung, ein Kraftfahrzeugkennzeichen und Befestigungselemente. Die Befestigungselemente können beispielsweise als Schrauben ausgebildet sein. Das Kraftfahrzeugkennzeichen ist unter Verwendung der Vorrichtung und der Befestigungselemente an der Karosserie befestigt. Beispielsweise kann das Kraftfahrzeugkennzeichen zwischen den Halterungsmitteln eingeklemmt sein. Die Befestigungselemente ragen durch die Ausnehmungen und die Karosserie hindurch.

Es ist auch möglich, dass das Kraftfahrzeug zwei Vorrichtungen nach einer Ausführungsform der Erfindung umfasst, wobei beide Vorrichtungen zur Halterung des Kraftfahrzeugkennzeichens genutzt werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Dabei werden für gleiche oder ähnliche Bauteile und für Bauteile mit gleichen oder ähnlichen Funktionen dieselben Bezugszeichen verwendet. Darin zeigen:
- Fig. 1: eine schematische perspektivische Ansicht einer Vorrichtung nach einer Ausführungsform der Erfindung;
- Fig. 2: eine schematische seitliche Ansicht der Vorrichtung aus Fig. 1;
- Fig. 3: einen vergrößerten Ausschnitt aus Fig. 2;
- Fig. 4: eine schematische perspektivische Ansicht der Vorrichtung aus Fig. 1;
- Fig. 5: eine schematische perspektivische Ansicht einer Vorrichtung nach einer Ausführungsform der Erfindung mit einem Anzeigeelement;
- Fig. 6: eine schematische perspektivische Ansicht einer Vorrichtung nach einer Ausführungsform der Erfindung mit einem dreieckigen Anzeigeelement;
- Fig. 7: eine schematische perspektivische Ansicht einer Vorrichtung nach einer Ausführungsform der Erfindung mit einem kreisförmigen Anzeigeelement;
- Fig. 8: eine schematische perspektivische Ansicht einer Vorrichtung nach einer Ausführungsform der Erfindung mit einem Anzeigeelement; und
- Fig. 9: eine schematische perspektivische Ansicht einer Vorrichtung nach einer Ausführungsform der Erfindung mit einem Anzeigeelement.

Die Vorrichtung 100 umfasst einen Grundkörper 101 und davon in etwa senkrecht wegragende Halterungsmittel 102. Der Grundkörper 101 weist Langlöcher 103 und ein Rundloch 104 auf. Am Grundkörper 101 sind außerdem Dämpfungselemente 105 angeordnet. Die Halterungsmittel 102 weisen jeweils Halterungselemente 106 und 107 auf.

Der Grundkörper 101 ist elastisch verformbar. Bei einer elastischen Verformung kann der Abstand der Halterungsmittel 102 voneinander in begrenztem Maße vergrößert werden. Ein Kraftfahrzeugkennzeichen kann durch die Vorrichtung 100 gehalten werden, indem es zwischen den Halterungsmitteln 102 im elastisch verformten Zustand des Grundkörpers 101 angeordnet wird. Je nach Dicke des Kraftfahrzeugkennzeichens wird es in den als Nuten ausgebildeten Halterungselementen 106 oder 107 gehalten. Ein dickeres Kraftfahrzeugkennzeichen lässt sich im Halterungselement 106 anordnen, während ein dünneres Kraftfahrzeugkennzeichen im Halterungselement 107 gehalten wird. Zu diesem Zweck weist das Halterungselement 106 eine dickere Ausgestaltung auf als das Halterungselement 107. Die elastische Rückstellkraft des Grundkörpers 101 hält das Kraftfahrzeugkennzeichen dann sicher zwischen den Halterungsmitteln 102.

Die Montage der Vorrichtung am Kraftfahrzeug erfolgt mittels der Ausnehmungen 103 und/oder 104. Aufgrund der Vielzahl an Ausnehmungen 103 und 104 können verschiedene durch das Kraftfahrzeug definierte notwendige Abstände zwischen Befestigungselementen, wie beispielsweise Schrauben, realisiert werden.

Die Dämpfungselemente 105 erstrecken sich sowohl auf der dem Kraftfahrzeugkennzeichen zugewandten Seite des Grundkörpers 101 als auch auf der dem Kraftfahrzeug zugewandten Seite des Grundkörpers 101. Sie erstrecken sich jeweils an den Längsenden des Grundkörpers 101 seitlich versetzt zu den Ausnehmungen 103 und 104. Die Dämpfungselemente 105 bestehen aus einem Elastomer und dämpfen beim Betrieb des Kraftfahrzeugs auftretende Vibrationen, um das Risiko unerwünschter Geräusche der Vorrichtung 100 und/oder des Kraftfahrzeugkennzeichens zu verringern.

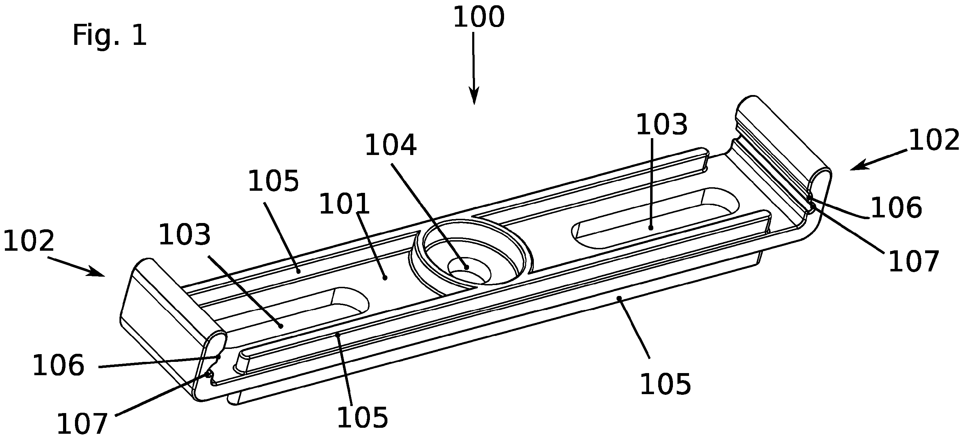

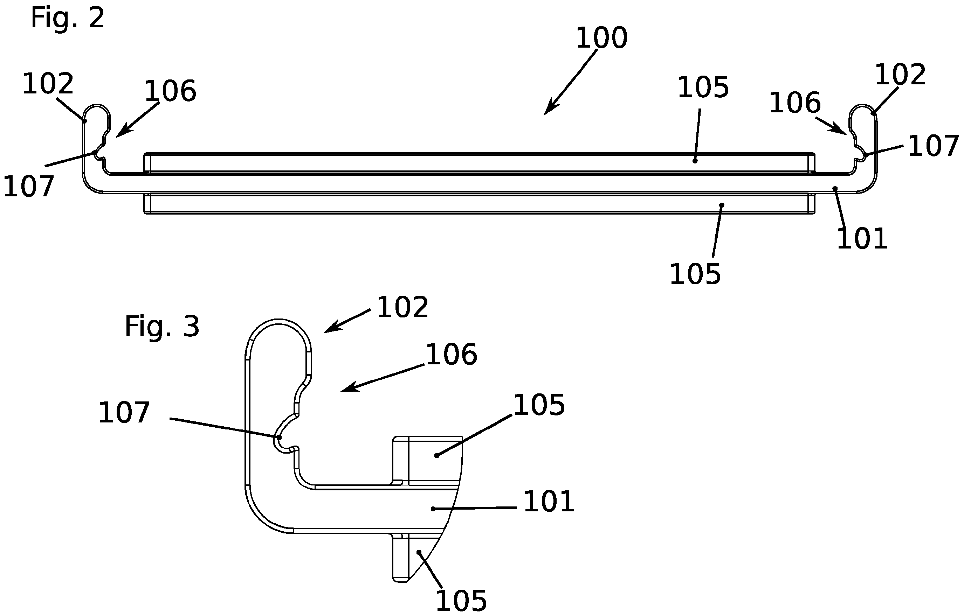

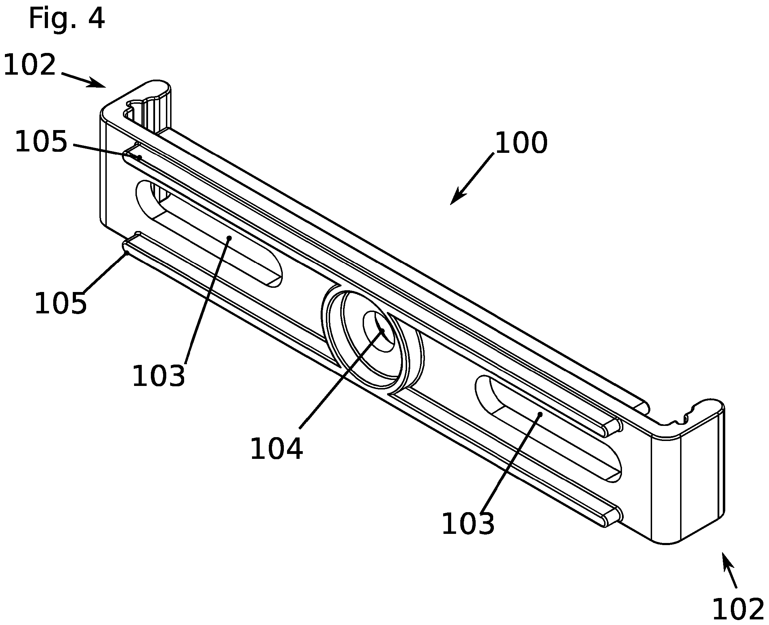

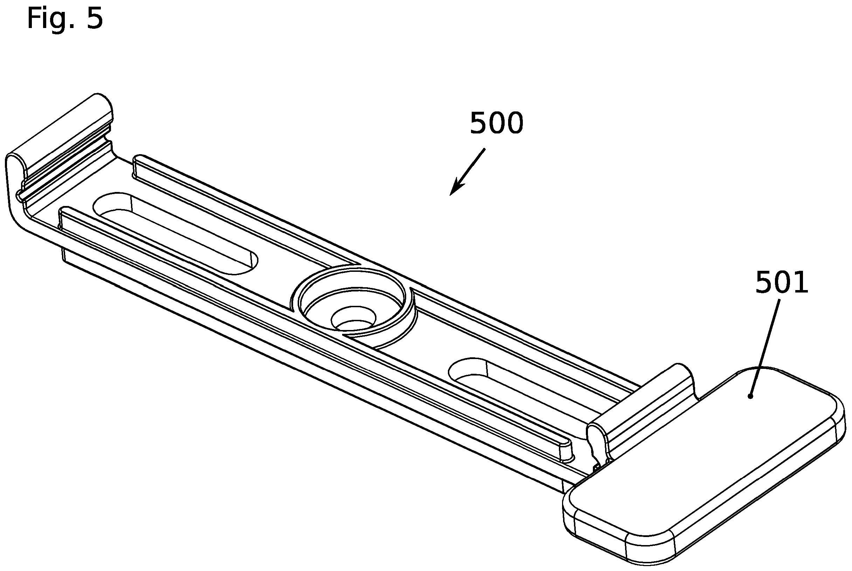

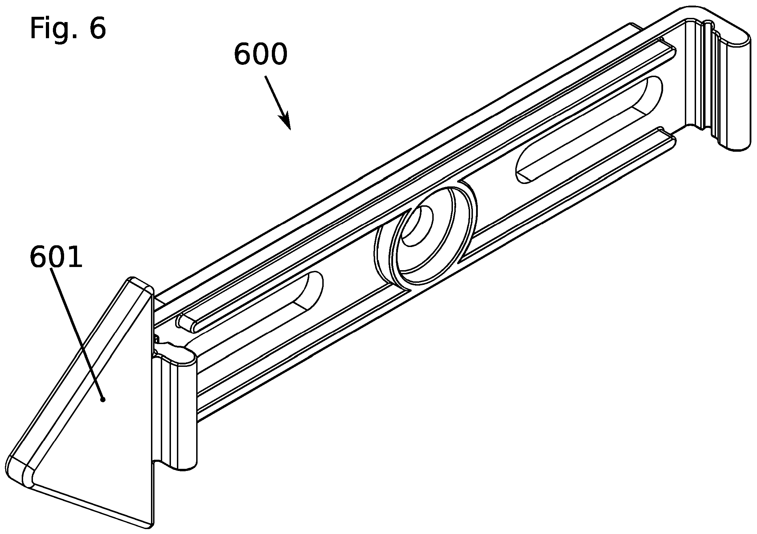

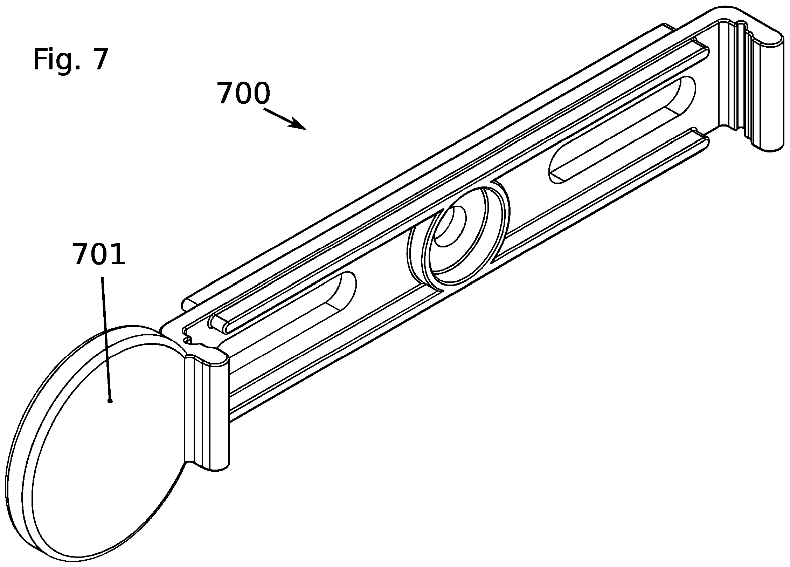

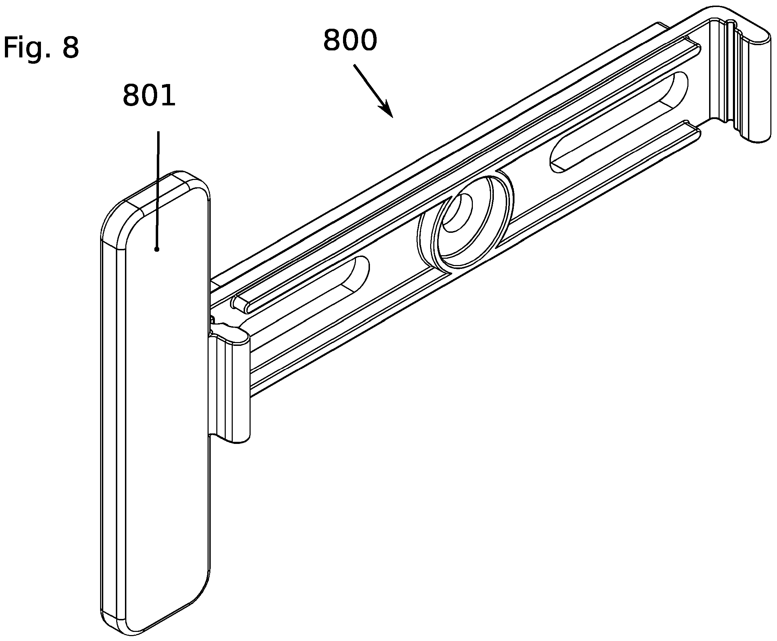

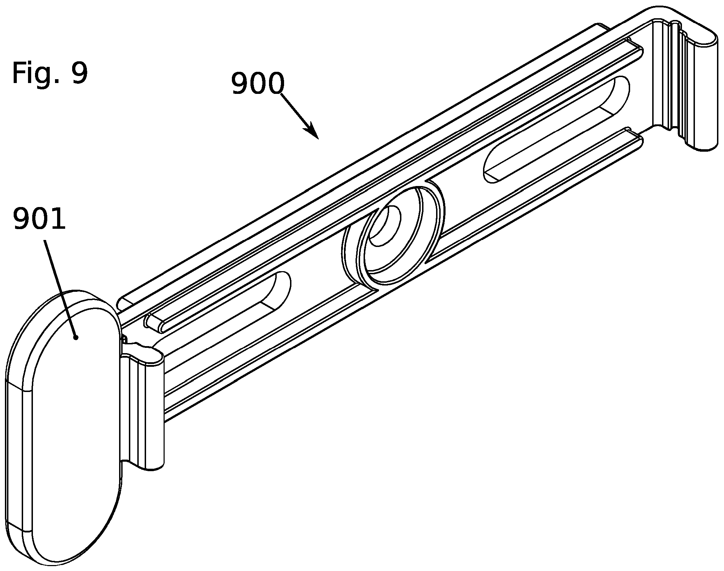

Die Vorrichtungen 500, 600, 700, 800 und 900 aus den Figuren 5 bis 9 unterscheiden sich durch die Anzeigeelemente 501, 601, 701, 801 und 901 von der Vorrichtung 100 aus den Figuren 1 bis 4. Die Anzeigeelemente 501, 601, 701, 801 und 901 können beispielsweise zur Darstellung von Informationen und/oder Werbung genutzt werden. Sie sind an einem der Halterungsmittel 102 angeordnet und erstrecken sich vom Grundkörper 101 weg parallel zu einer geometrischen Verlängerung des Grundkörpers 101.

Die Anzeigeelemente 501, 801 und 901 weisen dabei im Querschnitt die Form einer Superellipse auf. Das Anzeigeelement 601 weist dabei im Querschnitt die Form eines Dreiecks auf. Das Anzeigeelement 701 weist dabei im Querschnitt die Form eines Kreises auf.

## Patentansprüche

1. Vorrichtung (100; 500; 600; 700; 800; 900) zur Halterung eines Kraftfahrzeugkennzeichens, umfassend einen Grundkörper (101), ein erstes Halterungsmittel (102), ein zweites Halterungsmittel (102) zur Halterung des Kraftfahrzeugkennzeichens und Befestigungsmittel (103; 104) zur Befestigung der Vorrichtung (100; 500; 600; 700; 800; 900) an einem Kraftfahrzeug, wobei die Befestigungsmittel (103; 104) als Ausnehmungen ausgebildet sind, wobei die Halterungsmittel (102) an zwei einander gegenüber angeordneten Enden des Grundkörpers (101) angeordnet sind, wobei der Grundkörper (101) und/oder die Halterungsmittel (102) elastisch verformbar sind/ist, sodass ein Kraftfahrzeugkennzeichen nach einer Verformung des Grundkörpers (101) und/oder der Halterungsmittel (102) zwischen den Halterungsmitteln (102) anordenbar ist und danach durch eine elastische Rückstellkraft zwischen den Halterungsmitteln (102) eingeklemmt ist, **dadurch gekennzeichnet, dass** die Halterungsmittel (102) jeweils ein erstes Halterungselement (106) und ein zweites Halterungselement (107) aufweisen, wobei das erste Halterungselement (106) und das zweite Halterungselement (107) in der gleichen Richtung vom Grundkörper beabstandet angeordnet sind, wobei das Kraftfahrzeugkennzeichen durch die elastische Rückstellkraft zwischen dem ersten Halterungselement (106) des ersten Halterungsmittels (102) und dem ersten Halterungselement (106) des zweiten Halterungsmittels (102) oder zwischen dem zweiten Halterungselement (107) des ersten Halterungsmittels (102) und dem zweiten Halterungselement (107) des zweiten Halterungsmittels (102) einklemmbar ist, wobei die Halterungselemente (106; 107) unterschiedliche Dicken und/oder Abstände vom Grundkörper (101) aufweisen.

2. Vorrichtung (100; 500; 600; 700; 800; 900) nach Anspruch 1, **dadurch gekennzeichnet, dass** sich die Halterungsmittel (102) in etwa senkrecht weg vom Grundkörper (101) erstrecken.

3. Vorrichtung (100; 500; 600; 700; 800; 900) nach einem der vorherigen Ansprüche, **dadurch gekennzeichnet, dass** die Halterungsmittel (102) an den am weitesten voneinander entfernten Enden des Grundkörpers (101) angeordnet sind.

4. Vorrichtung (100; 500; 600; 700; 800; 900) nach einem der vorherigen Ansprüche, **dadurch gekennzeichnet, dass** die Ausnehmungen (103; 104) ein erstes Langloch (103) umfassen.

5. Vorrichtung (100; 500; 600; 700; 800; 900) nach dem vorherigen Anspruch, **dadurch gekennzeichnet, dass** die Ausnehmungen (103; 104) ein zweites Langloch (103) und ein Rundloch (104) umfassen, wobei das Rundloch (104) zwischen dem ersten Langloch (103) und dem zweiten Langloch (103) angeordnet ist.

6. Vorrichtung (100; 500; 600; 700; 800; 900) nach dem vorherigen Anspruch, **dadurch gekennzeichnet, dass** das Rundloch (104) mittig am Grundkörper (101) und/oder mittig zwischen dem ersten Langloch (103) und dem zweiten Langloch (103) angeordnet ist.

7. Vorrichtung (100; 500; 600; 700; 800; 900) nach einem der vorherigen Ansprüche, **dadurch gekennzeichnet, dass** die Vorrichtung (100; 500; 600; 700; 800; 900) am Grundkörper (101) angeordnete Dämpfungselemente (105) aufweist, die aus einem Elastomer bestehen.

8. Vorrichtung (100; 500; 600; 700; 800; 900) nach dem vorherigen Anspruch, **dadurch gekennzeichnet, dass** die Dämpfungselemente (105) auf zwei einander gegenüberliegenden Seiten des Grundkörpers (101) angeordnet sind.

9. Vorrichtung (100; 500; 600; 700; 800; 900) nach einem der beiden vorherigen Ansprüche, **dadurch gekennzeichnet, dass** die Dämpfungselemente (105) sich über mehr als 2/3 einer Länge des Grundkörpers (101) erstrecken.

10. Vorrichtung (100; 500; 600; 700; 800; 900) nach einem der drei vorherigen Ansprüche, **dadurch gekennzeichnet, dass** die Dämpfungselemente (105) zwischen den Ausnehmungen (103; 104) und Längsenden des Grundkörpers (101) angeordnet sind.

11. Vorrichtung (100; 500; 600; 700; 800; 900) nach einem der vorherigen Ansprüche, **dadurch gekennzeichnet, dass** der Grundkörper (101) und das Halterungsmittel (102) einteilig und/oder einstückig ausgebildet sind.

12. Vorrichtung (100; 500; 600; 700; 800; 900) nach einem der vorherigen Ansprüche, **dadurch gekennzeichnet, dass** die Vorrichtung ein Anzeigeelement (501; 601; 701; 801; 901) umfasst, das an einem der Halterungsmittel (102) angeordnet ist und vom Grundkörper (101) weg ragt.

13. System, umfassend zwei Vorrichtungen (100; 500; 600; 700; 800; 900) nach einem der vorherigen Ansprüche.

14. Kraftfahrzeug, umfassend eine Karosserie, eine Vorrichtung (100; 500; 600; 700; 800; 900) nach einem der Ansprüche 1 bis 12, ein Kraftfahrzeugkennzeichen und Befestigungselemente, wobei das Kraftfahrzeugkennzeichen unter Verwendung der Vorrichtung (100; 500; 600; 700; 800; 900) und der Befestigungselemente an der Karosserie befestigt ist, und wobei die Befestigungselemente durch die Ausnehmungen (103; 104) und die Karosserie hindurch ragen.

## Claims

1. Device (100; 500; 600; 700; 800; 900) for holding a vehicle licence plate, comprising a base body (101), a first holding means (102), a second holding means (102) for holding the vehicle licence plate and fastening means (103; 104) for fastening the device (100; 500; 600; 700; 800; 900) to a motor vehicle, wherein the fastening means (103; 104) are configured as recesses, wherein the holding means (102) are arranged at two opposite ends of the base body (101), wherein the base body (101) and/or the holding means (102) is/are elastically deformable, so that a vehicle licence plate can be arranged between the holding means (102) after a deformation of the base body (101) and/or the holding means (102) and is then clamped between the holding means (102) by an elastic restoring force, **characterised in that** the holding means (102) each have a first holding element (106) and a second holding element (107), wherein the first holding element (106) and the second holding element (107) are arranged spaced apart from the base body in the same direction, wherein the vehicle licence plate can be clamped by the elastic restoring force between the first holding element (106) of the first holding means (102) and the first holding element (106) of the second holding means (102) or between the second holding element (107) of the first holding means (102) and the second holding element (107) of the second holding means (102), wherein the holding elements (106; 107) have different thicknesses and/or distances from the base body (101).

2. Device (100; 500; 600; 700; 800; 900) according to claim 1, **characterised in that** the holding means (102) extend approximately perpendicularly away from the base body (101).

3. Device (100; 500; 600; 700; 800; 900) according to any of the preceding claims, **characterised in that** the holding means (102) are arranged at the most distance ends of the base body (101).

4. Device (100; 500; 600; 700; 800; 900) according to any of the preceding claims, **characterised in that** the recesses (103; 104) comprise a first elongated hole (103).

5. Device (100; 500; 600; 700; 800; 900) according to the preceding claim, **characterised in that** the recesses (103; 104) comprise a second elongated hole (103) and a round hole (104), wherein the round hole (104) is arranged between the first elongated hole (103) and the second elongated hole (103).

6. Device (100; 500; 600; 700; 800; 900) according to the preceding claim, **characterised in that** the round hole (104) is arranged centrally on the base body (101) and/or centrally between the first elongated hole (103) and the second elongated hole (103).

7. Device (100; 500; 600; 700; 800; 900) according to any of the preceding claims, **characterised in that** the device (100; 500; 600; 700; 800; 900) has damping elements (105) which are arranged on the base body (101) and consist of an elastomer.

8. Device (100; 500; 600; 700; 800; 900) according to the preceding claim, **characterised in that** the damping elements (105) are arranged on two opposite sides of the base body (101).

9. Device (100; 500; 600; 700; 800; 900) according to any of the two preceding claims, **characterised in that** the damping elements (105) extend over more than 2/3 of a length of the base body (101).

10. Device (100; 500; 600; 700; 800; 900) according to any of the three preceding claims, **characterised in that** the damping elements (105) are arranged between the recesses (103; 104) and longitudinal ends of the base body (101).

11. Device (100; 500; 600; 700; 800; 900) according to any of the preceding claims, **characterised in that** the base body (101) and the holding means (102) are configured to be integral and/or in one piece.

12. Device (100; 500; 600; 700; 800; 900) according to any of the preceding claims, **characterised in that** the device comprises a display element (501; 601; 701; 801; 901) which is arranged on one of the holding means (102) and projects away from the base body (101).

13. System comprising two devices (100; 500; 600; 700; 800; 900) according to any of the preceding claims.

14. Motor vehicle, comprising a chassis, a device (100; 500; 600; 700; 800; 900) according to any of claims 1 to 12, a vehicle licence plate and fastening elements, wherein the vehicle licence plate is fastened to the chassis by using the device (100; 500; 600; 700; 800; 900) and the fastening elements, and wherein the fastening elements extend through the recesses (103; 104) and the chassis.

## Revendications

1. Dispositif (100; 500; 600; 700; 800; 900) pour maintenir une plaque d'immatriculation de véhicule automobile, comprenant un corps de base (101), un premier moyen de maintien (102), un second moyen de maintien (102) pour maintenir la plaque d'immatriculation de véhicule automobile et des moyens de fixation (103 ; 104) pour fixer le dispositif (100 ; 500 ; 600 ; 700 ; 800 ; 900) sur un véhicule automobile, dans lequel les moyens de fixation (103 ; 104) sont réalisés en tant qu'évidements, dans lequel les moyens de maintien (102) sont disposés à deux extrémités du corps de base (101) disposées à l'opposé l'une de l'autre, dans lequel le corps de base (101) et/ou les moyens de maintien (102) sont élastiquement déformables de sorte qu'une plaque d'immatriculation de véhicule automobile peut être disposée entre les moyens de maintien (102) après une déformation du corps de base (101) et/ou des moyens de maintien (102) puis est serrée entre les moyens de maintien (102) par une force de rappel élastique, **caractérisé en ce que** les moyens de maintien (102) présentent respectivement un premier élément de maintien (106) et un second élément de maintien (107), dans lequel le premier élément de maintien (106) et le second élément de maintien (107) sont disposés à distance du corps de base dans la même direction, dans lequel la plaque d'immatriculation de véhicule automobile peut être serrée par la force de rappel élastique entre le premier élément de maintien (106) du premier moyen de maintien (102) et le premier élément de maintien (106) du second moyen de maintien (102) ou entre le second élément de maintien (107) du premier moyen de maintien (102) et le second élément de maintien (107) du second moyen de maintien (102), dans lequel les éléments de maintien (106 ; 107) présentent des épaisseurs et/ou des distances différentes par rapport au corps de base (101).

2. Dispositif (100 ; 500 ; 600 ; 700 ; 800 ; 900) selon la revendication 1, **caractérisé en ce que** les moyens de maintien (102) s'étendent environ perpendiculairement à l'écart du corps de base (101).

3. Dispositif (100; 500; 600; 700; 800; 900) selon l'une quelconque des revendications précédentes, **caractérisé en ce que** les moyens de maintien (102) sont disposés aux extrémités du corps de base (101) les plus éloignées les unes des autres.

4. Dispositif (100; 500; 600; 700; 800; 900) selon l'une quelconque des revendications précédentes, **caractérisé en ce que** les évidements (103 ; 104) comprennent un premier trou oblong (103).

5. Dispositif (100 ; 500 ; 600 ; 700 ; 800 ; 900) selon la revendication précédente, **caractérisé en ce que** les évidements (103 ; 104) comprennent un second trou oblong (103) et un trou rond (104), dans lequel le trou rond (104) est disposé entre le premier trou oblong (103) et le second trou oblong (103).

6. Dispositif (100 ; 500 ; 600 ; 700 ; 800 ; 900) selon la revendication précédente, **caractérisé en ce que** le trou rond (104) est disposé de manière centrale sur le corps de base (101) et/ou de manière centrale entre le premier trou oblong (103) et le second trou oblong (103).

7. Dispositif (100; 500; 600; 700; 800; 900) selon l'une quelconque des revendications précédentes, **caractérisé en ce que** le dispositif (100 ; 500; 600; 700; 800 ; 900) présente des éléments d'amortissement (105) disposés sur le corps de base (101), qui consistent en un élastomère.

8. Dispositif (100 ; 500 ; 600 ; 700 ; 800 ; 900) selon la revendication précédente, **caractérisé en ce que** les éléments d'amortissement (105) sont disposés sur deux côtés opposés du corps de base (101).

9. Dispositif (100; 500; 600; 700; 800; 900) selon l'une quelconque des deux revendications précédentes, **caractérisé en ce que** les éléments d'amortissement (105) s'étendent sur plus de 2/3 d'une longueur du corps de base (101).

10. Dispositif (100 ; 500; 600; 700; 800; 900) selon l'une quelconque des trois revendications précédentes, **caractérisé en ce que** les éléments d'amortissement (105) sont disposés entre les évidements (103 ; 104) et des extrémités longitudinales du corps de base (101).

11. Dispositif (100; 500; 600; 700; 800; 900) selon l'une quelconque des revendications précédentes, **caractérisé en ce que** le corps de base (101) et le moyen de maintien (102) sont réalisés d'une seule pièce et/ou d'un seul tenant.

12. Dispositif (100; 500; 600; 700; 800; 900) selon l'une quelconque des revendications précédentes, **caractérisé en ce que** le dispositif comprend un élément d'affichage (501 ; 601 ; 701 ; 801 ; 901), qui est disposé sur un des moyens de maintien (102) et fait saillie à l'écart du corps de base (101).

13. Système comprenant deux dispositifs (100 ; 500 ; 600 ; 700 ; 800 ; 900) selon l'une des revendications précédentes.

14. Véhicule automobile comprenant une carrosserie, un dispositif (100 ; 500; 600 ; 700; 800; 900) selon l'une quelconque des revendications 1 à 12, une plaque d'immatriculation de véhicule automobile et des éléments de fixation, dans lequel la plaque d'immatriculation de véhicule automobile est fixée sur la carrosserie à l'aide du dispositif (100 ; 500 ; 600 ; 700 ; 800 ; 900) et des éléments de fixation, et dans lequel les éléments de fixation font saillie à travers les évidements (103 ; 104) et la carrosserie.
